# EUROPEAN PATENT APPLICATION

(11) **EP 3 346 441 A1**
(43) Date of publication of application: **11.07.2018**
(21) Application number: 16842145.1
(22) Date of filing: 12.08.2016
(51) Int. Cl.: G06Q 50/26, G06Q 50/10, B64C 39/02

(54) **METHOD, USER TERMINAL, SERVER, AND DETECTING DEVICE FOR MONITORING FLIGHT OF UNMANNED AERIAL VEHICLE**

(30) Priority: 04.09.2015 KR 20150125862; 23.10.2015 KR 20150148318
(71) Applicant: Yu, Seong Hun, Suwon-si, Gyeonggi-do 16554 (KR)
(72) Inventor: Yu, Seong Hun, Suwon-si, Gyeonggi-do 16554 (KR)
(74) Representative: Klunker IP Patentanwälte PartG mbB
(86) International application number: PCT/KR2016/008930
(87) International publication number: WO 2017/039179

(57) **Abstract**

According to an aspect of the present invention, a method for monitoring the flight of an unmanned aerial vehicle is provided, the method comprising the steps of: (a) when a user terminal or detecting device is located within a predetermined distance range from at least one unmanned aerial vehicle and acquires at least one piece of identification information from each of the at least one unmanned aerial vehicle, receiving, by a server, the acquired at least one piece of identification information from the user terminal or the detecting device; and (b) transmitting, by the server, detailed information on the unmanned aerial vehicle corresponding to the received at least one piece of identification information to the user terminal or detecting device, so as to support the user terminal or detecting device to provide the same to the user.

## Description

The present invention relates to a method, a user terminal, a server and a detecting device for monitoring a flight of an unmanned aerial vehicle (UAV); and more particularly, to the method for improving safety, preventing security breach or privacy invasion, and monitoring the flight of the UAV, and the user terminal, the server and the detecting device using the same.

An unmanned aerial vehicle (UAV) means an aircraft without a human pilot. The term "UAV" may be mixed with general terms such as an unmanned aircraft, an unmanned vehicle, a drone, or an unmanned plane.

In the past, the UAVs were mainly used for military use, for example, as targets representing enemies' aircrafts, or for reconnaissance, but recently, they are more widely used in the private sector. In particular, the UAVs for commercial use are becoming popular, or regulations for its use are waiting to be passed, in many countries around the world including the United States. Further, even UAVs for hobbies are widely spread.

The UAVs, however, have risks of damaging lives or facilities due to crashes. When a camera or a listening device is installed in such UAVs, the UAVs may violate privacy of other people or cause security breach as it records a video or an audio without a consent or other people realizing it.

To solve such problems, a variety of solutions including legal regulations are proposed, but due to limitation in costs and technology, the aforementioned risks have failed to be completely solved.

Accordingly, a technology for increasing safety from UAVs, preventing the security breach or the invasion of privacy, and monitoring a flight status is required.

It is an object of the present invention to solve all problems explained above.

It is another object of the present invention to provide a technology for increasing safety from UAVs, preventing security breach or invasion of privacy, and monitoring a flight status.

It is still another object of the present invention to make a user easily recognize a presence of an approaching anonymous UAV by receiving identification information from the anonymous UAV and providing detailed information on the UAV corresponding to the identification information.

It is still yet another object of the present invention to make the user easily recognize a presence of the anonymous UAV by identifying the anonymous UAV from the image or the sound of the anonymous UAV.

It is still yet another object of the present invention to make the user simply report the anonymous UAV to a government agency and allow the government agency to properly monitor whether a flight of the UAV is legal or not.

In accordance with one aspect of the present invention, there is provided a method for monitoring a flight of an unmanned aerial vehicle (UAV), including steps of: (a) a server, if a user device or a detecting device within a certain distance from at least one UAV acquires at least one piece of identification information from each of the at least one UAV, receiving the at least one piece of the identification information from the user device or the detecting device; and (b) the server transmitting detailed information on the at least one UAV corresponding to the at least one piece of the received identification information to the user device or the detecting device to thereby support the user device or the detecting device to provide a user of the user device with the detailed information.

In accordance with another aspect of the present invention, there is provided a method for monitoring a flight of a UAV, including steps of: (a) a user device, if determined to be within a certain distance from at least one UAV, receiving at least one piece of identification information from each of the at least one UAV; and (b) the user device acquiring detailed information on the at least one UAV corresponding to the at least one piece of the received identification information, and providing a user of the user device with the detailed information.

In accordance with still another aspect of the present invention, there is provided a method for monitoring a flight of a UAV, including steps of: (a) a detecting device, if determined to be within a certain distance from at least one UAV, receiving at least one piece of identification information from each of the at least one UAV; and (b) the detecting device acquiring detailed information on the at least one UAV corresponding to the received at least one piece of the identification information and providing a user device with the detailed information, or supporting the user device to acquire the detailed information by providing the user device with the at least one piece of identification information.

In accordance with still yet another aspect of the present invention, there is provided a server for monitoring a flight of a UAV, including: a communication part, if a user terminal or a detecting device within a certain distance from at least one UAV acquires at least one piece of identification information from each of the at least one UAV, for receiving the at least one piece of the acquired identification information from the user terminal or the detecting device; and a database managing part for acquiring detailed information on the at least one UAV corresponding to the received at least one piece of the identification information and supporting another device to provide the user device or the detecting device with the detailed information.

In accordance with still yet another aspect of the present invention, there is provided a user terminal for monitoring a flight of a UAV, including: a communication part, if the user terminal is determined to be within a certain distance from at least one UAV, for receiving at least one piece of identification information from each of the at least one UAV; and a user interface provider for acquiring detailed information on the at least one UAV corresponding to the received at least one piece of the identification information and providing a user of the user terminal with the detailed information.

In accordance with still yet another aspect of the present invention, there is provided a detecting device for monitoring a flight of a UAV, including: a communication part, if the detecting device is determined to be within a certain distance from at least one UAV, for receiving at least one piece of identification information from each of the at least one UAV; and a processor for acquiring detailed information on the at least one UAV corresponding to the received at least one piece of the identification information and providing a user device with the detailed information, or supporting the user device to acquire the detailed information by providing the user device with the at least one piece of identification information.

The drawings attached below to explain example embodiments of the present invention are only part of example embodiments of the present invention and other drawings may be obtained based on the drawings without inventive work for those skilled in the art:
Fig. 1 is a drawing schematically illustrating a conceptual diagram of a method for monitoring a flight of a UAV in accordance with one example embodiment of the present invention.
Fig. 2 is a block diagram schematically illustrating a configuration of a user device in accordance with one example embodiment of the present invention.
Fig. 3 is a drawing illustrating examples of detailed information on the UAV displayed on a screen of the user device in accordance with the present invention.
Fig. 4 is a drawing illustrating an example of indicating location information of the UAV on a map in accordance with the present invention.
Fig. 5 is a block diagram illustrating a configuration of a detecting device in accordance with one example embodiment of the present invention.
Fig. 6 is a block diagram illustrating a configuration of a server in accordance with one example embodiment of the present invention.

Detailed explanations below of the present invention refer to attached drawings that illustrate specific embodiment examples of this present that may be executed. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the spirit and scope of the present invention. In addition, it is to be understood that the position or arrangement of individual elements within each disclosed embodiment may be modified without departing from the spirit and scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

A term "UAV" in this specification is a concept embracing all general terms, including an unmanned plane, an unmanned vehicle, a drone, and an unmanned aircraft. In other words, technological thoughts of the present invention may be applied to all unmanned planes, unmanned vehicles, drones, unmanned aircrafts, etc.

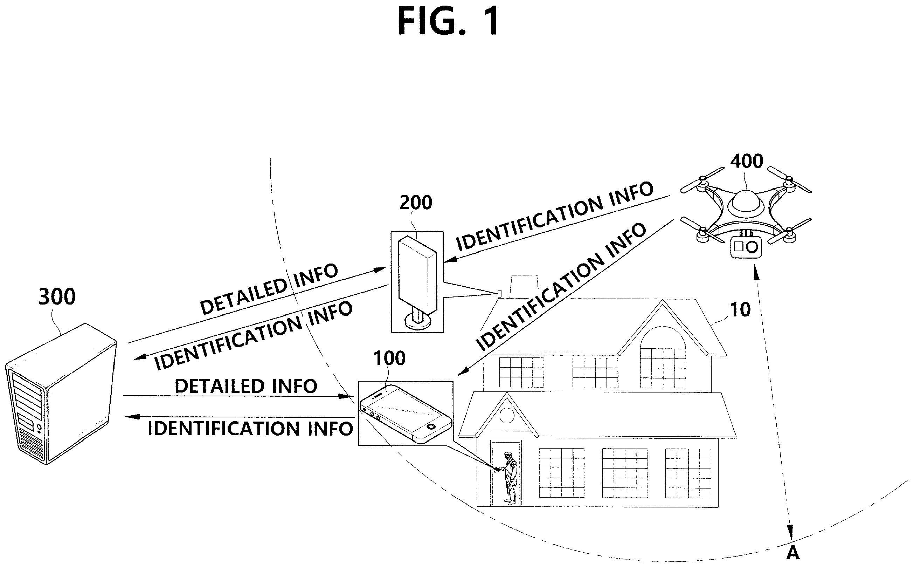

Fig. 1 is a drawing schematically illustrating a conceptual diagram of monitoring a flight of a UAV in accordance with one example embodiment of the present invention.

By referring to Fig. 1, a user device 100 held by a user or a detecting device 200 installed on a specified outdoor location, e.g., a rooftop of a building, may detect at least one UAV 400 flying in proximity. Specifically, the UAV 400 may transmit its identification information to communication devices such as the user device 100 or the detecting device 200 within a certain distance A at a specified interval of time. The communication devices such as the user device 100 or the detecting device 200 may detect the flight of the UAV 400 by receiving the identification information. The UAV 400 may continuously transmit the identification information to a plurality of user devices 100 or a plurality of detecting devices 200 located near a trajectory of the UAV 400 because the UAV 400 moves across wide areas. For example, if the UAV 400 flies from a region X to a region Z by way of a region Y, the UAV 400 may transmit the identification information sequentially to the plurality of the user devices 100 or the plurality of the detecting devices 200 in the regions X, Y, and Z. Because the identification information transmitted by the UAV 400 is broadcasted only to the communication devices located within the certain distance A, if the UAV 400 moves out of a particular region and thus the UAV 400 is away from the user device 100, etc. by a distance exceeding the certain distance A, then the user device 100, etc. at the particular region may not receive the identification information any more. In addition, the UAV 400 may be implemented to transmit the identification information only if the UAV 400 is in flight, e.g., if its rotor blade is rotating.

The user device 100 or the detecting device 200 may transmit the received identification information to a server 300, and may receive detailed information on the UAV 400 corresponding to the identification information from the server 300. Specifically, the server 300 may manage the identification information on multiple UAVs registered and their corresponding detailed information by using a database. If the server 300 receives the identification information from the user device 100 or the detecting device 200, the server 300 may retrieve the detailed information on the UAV 400 from the database by referring to the received identification information. The acquired detailed information on the UAV 400 may be transferred to the user device 100 or the detecting device 200. Clearly, if the detailed information is transmitted to the detecting device 200, the detecting device 200 may transmit the detailed information to the user device 100. Herein, the server 300 may include the database. But the database may be managed by a separate server as the case may be. Herein, the server 300 may transmit a search query to the separate server and receive only a result of the search query and then transmit the result to the user device 100 or the detecting device 200.

Herein, the detailed information means information including detailed characteristics of the UAV 400. For example, the detailed information may include at least some of information on (i) technical characteristics, i.e., a spec information on the UAV 400, (ii) at least one flight departure point, (iii) at least one flight destination, (iv) flight time, (v) at least one flight route, (vi) an item in transit, (vii) accident history, (viii) an operator, and (ix) whether the UAV 400 complies with aviation regulations. The detailed information may be information directly mapped to the identification information of the UAV 400 but may also be information including a result derived from a current flying status or a current flying condition of the UAV 400.

Among the examples explained above, the information on whether the UAV 400 complies with the aviation regulations may be information on a result of comparing a registered flight plan and a current flight location of the UAV 400. The current flight location may be acquired through the location information received from the user device 100 or the detecting device 200. As another example, the location information may be acquired from the UAV 400, as will be explained below.

The received detailed information may be displayed on a screen of the user device 100 or be outputted as a sound or a voice through the user device 100 or the detecting device 200. Accordingly, the user may recognize that an anonymous UAV among the UAVs 400 is approaching.

Meanwhile, if the server 300 receives the identification information from the user device 100, the server 300 may run a certain app on the user device 100 by transmitting a signal for running the certain app. In this case, the detailed information may be outputted through the certain app, and as will be explained below, the user may report the UAV 400 by using the certain app. Herein, an activation of the certain app may require a prior consent of the user.

Besides, if the detecting device 200 receives the detailed information on the UAV 400, the detecting device 200 may send the received detailed information to the user device 100 nearby or another device having an access right to the detecting device 200. In addition, the detecting device 200 may also provide the identification information received from the server 300 to the user device 100 or to said another device which has the access right to the detecting device 200, to thereby support the user device 100 or said another device to acquire the detailed information on the UAV 400.

Explanation on a configuration of the user device 100 and on a method for monitoring the flight of the UAV in accordance with the present invention will be made in more detail.

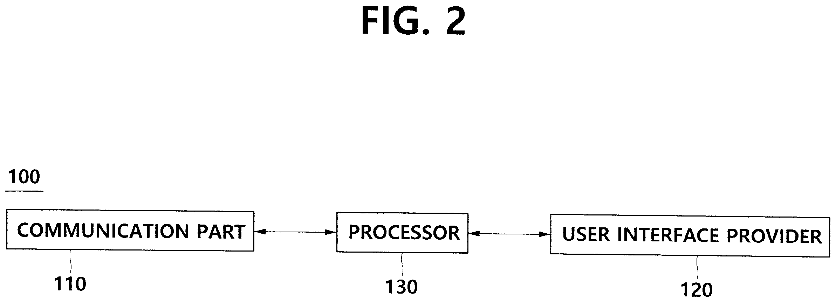

Fig. 2 is a block diagram illustrating a configuration of the user device in accordance with one example embodiment of the present invention.

By referring to Fig. 2, the user device 100 in accordance with one example embodiment of the present invention may include a communication part 110, a user interface provider 120, and a processor 130.

The communication part 110 has a configuration of receiving the identification information from at least one UAV. Specifically, if the user device 100 is within a certain distance from the at least one UAV, the communication part 110 may receive at least one piece of identification information from each of the at least one UAV. As explained above, the at least one UAV may transmit its identification information to the user device 100 within the certain distance at the specified interval of time, and then the communication part 110 may receive the identification information.

Herein, as the case may be, the at least one UAV may include a beacon and transmit identification information on the beacon to the user device 100 or the detecting device 200 within the certain distance. The beacon is a near field communication device that may transmit a message to a communication device within a radius from 0.5 m to 70 m. To receive the identification information from the beacon, the user device 100 and the detecting device 200 may keep a Bluetooth function on. However, the present invention does not exclude a different-type communication module other than the beacon. That is, the at least one UAV in accordance with the present invention may include a variety of communication modules capable of transmitting the identification information to a communication device within the certain distance.

Moreover, installation of the communication module to be placed in the at least one UAV in the present invention may be legally mandated. In addition, it may be embedded as in-mold, etc. in a mainboard to prevent unauthorized physical access of the user.

As for the communication part 110, it may transmit the received identification information to the server 300 and then receive the detailed information on the at least one UAV corresponding to the at least on piece of the identification information from the server 300.

The user interface provider 120 has a configuration of providing the detailed information on the at least one UAV. Specifically, the user interface provider 120 may provide the user with the detailed information on the at least one UAV corresponding to the piece of the identification information. Herein, the detailed information on the at least one UAV may be acquired from the server 300 as explained above or may also be directly acquired from another device or a database.

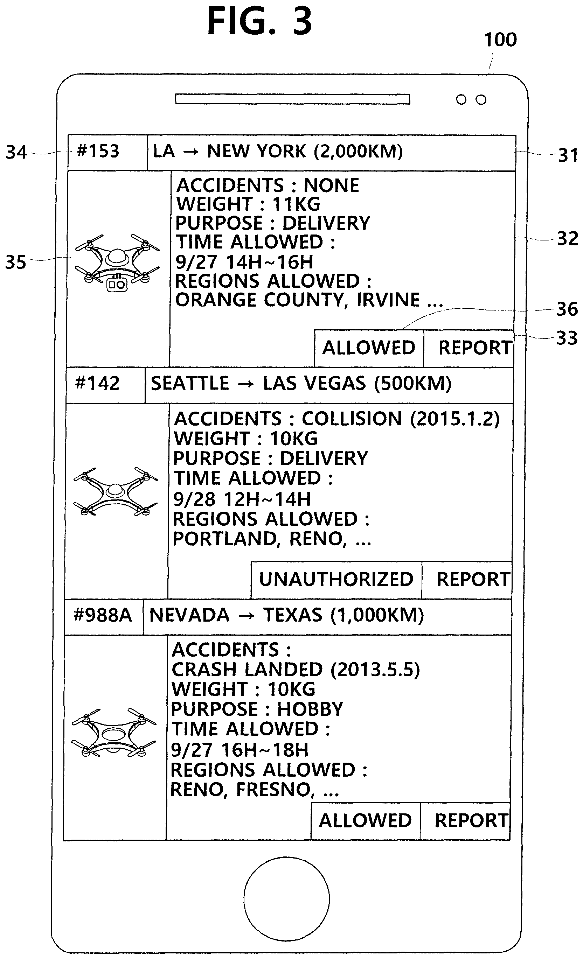

As explained above, the detailed information includes at least some of information on (i) technical characteristics, (ii) at least one flight departure point, (iii) at least one flight destination, (iv) flight time, (v) at least one flight route, (vi) an item in transit, (vii) accident history, (viii) an operator, and (ix) whether the at least one UAV complies with aviation regulations. However, these are merely examples, and as illustrated in Fig. 3, another type of the detailed information may also be provided.

Fig. 3 is a drawing illustrating an example of the detailed information on the UAV displayed on the screen of the user device in accordance with the present invention.

By referring to Fig. 3, the user interface provider 120 may output, as the detailed information, the identification information 34 of the UAV as well as information on an image 35 of the UAV, accident history of the UAV, freight of the UAV, purpose of the UAV operation, an allowed time and date of the flight, and a flight allowed zone of the UAV, etc.

Moreover, the user interface provider 120 may indicate information 36 on whether the UAV is flying at the allowed time and date of the flight. As explained above, the detailed information may be information directly mapped to the identification information on the at least one UAV, but may be information on a result derived from the current flight status or the current flight condition of the at least one UAV. The information 36 may be information determined as a result of comparison of a registered flight plan of the UAV and a current time and date. In Fig. 3, it can be found that while the UAVs having the identification information #153 and #988A are indicated as flying at the flight allowed time, the UAV having the identification information #142 is indicated as flying at a restricted time of the flight.

Additionally, the user interface provider 120 may provide a button UI 33 for reporting a certain UAV. If the certain UAV violates a regulation, for example, flies over a flight restricted zone or invades privacy, the user who has received the detailed information through the user device 100 may select the button UI 33 to report the specific UAV. In this case, the server 300 (or another server of a government agency in charge of the aviation regulations) may receive the report from the communication part 110 of the user device 100 and determine whether the flight of the specific UAV has been allowed. The result of the determination of whether the flight of the specific UAV has been allowed may be sent to a device of an operator of the specific UAV or the user device 100. If the specific UAV is determined as violating the regulations or invading privacy but the UAV does not change its course within a certain period of time, the operator of the specific UAV may be punished.

Herein, the server 300 may also provide the user device 100 with the information 36 on whether the specific UAV is flying at the flight allowed time as additional detailed information according to the result of the determination on whether the flight of the specific UAV has been allowed. In other words, the information 36 may not be provided as the detailed information at first, but may be provided as additional information by referring to the result of the determination on whether the flight has been allowed, where the result is acquired in response to the report of the user.

Besides, if the specific UAV is determined as violating the regulations, e.g., flying over the flight restricted zone or at a flight restricted time, or as invading privacy, the report may be automatically submitted.

Moreover, the communication part 110 of the user device 100 may also automatically transmit reports on all UAVs except some UAVs designated by the user to the server 300. In short, after the user registers said some UAVs as UAVs excluded from the reports, the automatic reports on all the UAVs whose identification information is received except the registered UAVs may be submitted.

If the report is submitted, the user device 100 may store the detailed information on the reported UAVs. If a certain period of time elapses or a storage limit is reached, the stored detailed information may be transmitted to the server 300 or another device.

In addition, if the report is submitted, the user device 100 or the server 300 which has received the report from the user device 100 may transmit information on the reported UAVs to the server of the government agency in charge of the aviation regulations. Herein, the user device 100 may transmit the identification information. In detail, the server of the government agency may provide information on the flight restricted zone or on aviation regulations, e.g., information on permission if a flight requires the permission in advance, information on a current waiting status of the flight over a certain region after the flight has been allowed, etc. Herein, the government agency may be an aviation control center, or a protected facility which requires security clearance for access.

Meanwhile, as explained above, if the detecting device 200 within a certain distance from the at least one UAV receives the piece of identification information from each of the UAV, the communication part 110 of the user device 100 may acquire the detailed information on the UAV corresponding to the received at least one identification information, or may acquire the detailed information on the UAV through the at least one piece of the acquired identification information. As the detecting device 200 is installed on the specified outdoor location, such as a rooftop of a building, it may be difficult for the user to check the received detailed information on the UAV. Therefore, the detecting device 200 may provide the user device 100 or a device located nearby with the detailed information or may provide it with the received identification information to thereby support it to acquire the detailed information on the UAV.

Meanwhile, if the user device 100 or the detecting device 200 within a certain distance from a specific UAV fails to acquire the identification information from the specific UAV or if the specific UAV is not identified by the identification information, the user interface provider 120 of the user device 100 may acquire the detailed information on the specific UAV corresponding to the acquired identification information of the specific UAV obtained as a result of recognizing an image or a sound of the specific UAV. For example, on condition that the detecting device 200 has a camera for acquiring an image or a microphone for acquiring a sound, if a flight zone or a flight path of a UAV corresponding to the identification information acquired from the specific UAV by the user device 100 or the detecting device 200 is determined as completely different from that of the specific UAV, the detecting device 200 may acquire the image or the sound of the specific UAV. In addition, the detecting device 200 may identify the specific UAV by analyzing the acquired image or the acquired sound, or transmit the acquired image or the acquired sound to the server 300 for allowing the server 300 to identify the specific UAV. Besides, if a probability of a UAV being the specific UAV is determined as less than a predetermined value by referring to the characteristic of the UAV corresponding to the identification information acquired from the specific UAV, the image or the sound may be acquired as shown above. However, even if the user device 100 or the detecting device 200 within the certain distance from the specific UAV acquires the identification information from the specific UAV, or the specific UAV is identified with the identification information, the detecting device 200 may also continuously acquire and analyze the image or the sound of the approaching specific UAV for identification, or to support another device to acquire and analyze the image or the sound thereof.

Meanwhile, if the specific UAV flies over a particular zone, an unmanned surveillance vehicle may be operated to monitor the specific UAV. While flying over the particular zone, the unmanned surveillance vehicle may acquire and analyze an image or a sound of the UAV approaching the particular zone to thereby identify the UAV, or support the server 300 or another device to identify the UAV by transmitting the acquired image or the acquired sound to the server 300 or said another device.

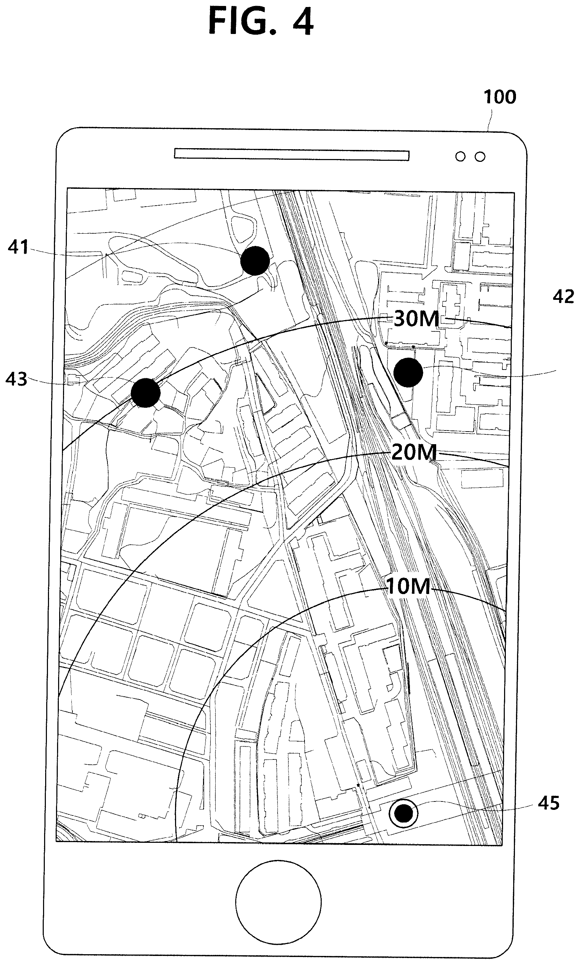

Meanwhile, the user device 100 or the detecting device 200 may receive the location information from each of the at least one UAV at the specified interval of time, and output the location information as an image or a sound. Fig. 4 illustrates such an example embodiment in accordance with the present invention.

Fig. 4 is a drawing illustrating an example of indicating the location information of the UAV on a map.

By referring to Fig. 4, the communication part 110 of the user device 100, or the communication part of the detecting device 200, may receive the location information from each of the at least one UAV at the specified interval of time and the user device 100 may show the received location information 41, 42, and 43 of the UAVs on the map. For this purpose, each UAV may include a means for acquiring the location information, e.g., a GPS module. In addition, as illustrated in Fig. 4, the user device 100 may also acquire the location information 45 of the user device 100 and show it on the map through a screen thereof. For this purpose, the user device 100 may also include a means for acquiring the location information, e.g., the GPS module. Besides, as illustrated in Fig. 4, information on a distance from the UAV approaching the user device 100 may be indicated on the map.

Besides, the user device 100 may also inform another device nearby of the received location information of the UAV. In addition, in case that the approaching UAV does not transmit its location information, the user device 100 may indirectly inform the location information on the approaching UAV by transmitting the location information of the user device 100, e.g., GPS information, to another device nearby.

Further, if the user selects the specific UAV shown on the map by touching it, etc., the detailed information on the selected specific UAV may be indicated. That is, if the user selects the specific UAV shown on the map by touching it, the user interface provider 120 may acquire and provide the detailed information corresponding to the selected specific UAV.

In addition, the UAV indicated on the map or indicated through the detailed information may be shown as categorized by a type of the UAV. For example, a UAV for safety and rescue may be represented in blue, a UAV for industrial use in orange, and a UAV for hobby in red.

The communication part 110 of the user device 100 may directly receive velocity information from the at least one UAV. As another example, the processor 130 may calculate the velocity information of the at least one UAV by using the received location information of the at least one UAV. If a magnitude of the velocity is determined as exceeding a predetermined value, the user interface provider 120 may output a fast approach warning signal.

The detecting device 200 may also perform similar operations. In other words, a communication part 210 of the detecting device 200 to be explained later may directly receive the velocity information from the at least one UAV. As another example, a processor 220 of the detecting device 200 may calculate the velocity information on the at least one UAV by using the location information of the at least one UAV and if the magnitude of the velocity is determined as exceeding a predetermined value, the processor 220 may output the fast approach warning signal or support another device or the user device 100 nearby to output the fast approach warning signal.

In addition, if the communication part 110 of the user device 100 receives information on an emergency along with the identification information from the specific UAV, the user device 100 or the detecting device 200 may output an image, a sound, or a vibration representing the emergency. The UAV may be implemented to have a separate communication module for transmitting the information on the emergency in addition to a communication module for transmitting the identification information. Herein, all of the two types of communication modules installed in the UAV may be beacons.

For example, if an airframe is tilted at 90 degrees, a parachute may open for safe landing. In this case, a beacon for transmitting the information on the emergency may send a signal, and if the user device 100 receives the signal including a unique number to which the signal is allocated, the user device 100 may determine that the UAV has a problem and raise a warning.

Besides, if an image of the specific UAV is acquired by an input of the user, the user interface provider 120 of the user device 100 may recognize the acquired image and provide information on sale of the specific UAV.

For example, if a UAV for hobby flies safely at an allowed zone, its air show, etc. may increase people's willingness to buy. Then, if the image of the UAV is taken by the user device 100, the user device 100 may provide information on sale of the UAV, a screen for supporting a user to purchase the UAV, or related advertisement. Clearly, such information may be provided by a separate server.

By referring to Fig. 2 again, the processor 130 may perform a function of controlling data flow among the communication part 110, the user interface provider 120, and other parts in the user device 100. In other words, the processor 130 may control data flow among components of the user device 100 to thereby control the communication part 110, the user interface provider 120 and the like, to perform their unique functions.

The processor 130 may include a hardware configuration of a Micro Processing Unit (MPU), a central processing unit (CPU), a cache memory, data bus, etc. In addition, it may further include a software configuration of an operation system, and an application for performing a particular purpose.

A configuration and an operation of the detecting device 200 will be explained below. The explanation on the similar part regarding the operation of the detecting device 200 will be omitted.

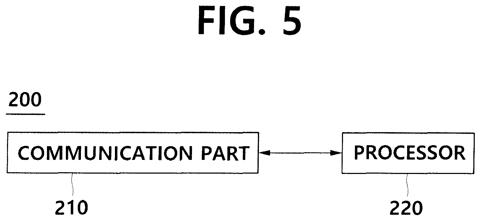

Fig. 5 is a drawing illustrating a configuration of the detecting device in accordance with one example embodiment of the present invention.

By referring to Fig. 5, the detecting device 200 in accordance with one example embodiment of the present invention may include the communication part 210 and the processor 220.

The communication part 210 has a configuration of receiving the identification information from the at least one UAV. Specifically, if the detecting device 200 is within a certain distance from the at least one UAV, the communication part 210 may receive the piece of the identification information from each of the at least one UAV. Besides, the communication part 210 may transmit the received identification information to the server 300 and receive the detailed information corresponding to the at least one UAV from the server 300.

The processor 220 has a configuration of acquiring the detailed information on the at least one UAV corresponding to the received piece of the identification information and providing it to the user device 100, or of supporting the user device 100 to acquire the detailed information on the at least one UAV by providing the received piece of the identification information to the user device 100.

The processor 220 may perform a function of controlling data flow among the communication part 210 and other parts in the detecting device 200. In other words, the processor 220 may control data flow among components of the detecting device 200 to thereby control the communication part 210 and the like to perform their unique functions.

The processor 220 may include a hardware configuration such as a Micro Processing Unit (MPU), a Central Processing Unit (CPU), cache memory, data bus, etc. Besides, it may further include a software configuration of an operation system, and an application for performing a particular purpose.

A configuration and an operation of the server 300 will be explained. The explanation on the similar part regarding the operation of the server 300 will be omitted.

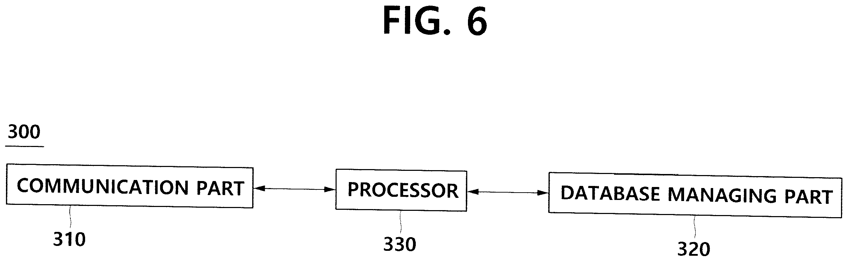

Fig. 6 is a block diagram illustrating a configuration of the server in accordance with one example embodiment of the present invention.

By referring to Fig. 6, the server 300 in accordance with one example embodiment of the present invention includes a communication part 310, a database managing part 320, and a processor 330.

The communication part 310 has a configuration of receiving the at least one piece of the identification information from the user device 100 or the detecting device 200, if the user device 100 or the detecting device 200 within the certain distance from the at least one UAV acquires the at least one piece of the identification information from at least one of each of the UAVs.

In particular, in case the user device 100 or the detecting device 200 fails to acquire the identification information from the specific UAV even if the user device 100 or the detecting device 200 is within the certain distance from the specific UAV, or in case the specific UAV is not identified even if the identification information is referred to, the communication part 310 may transmit the detailed information on the specific UAV corresponding to its identification information acquired as a result of recognizing the image or the sound of the specific UAV to the user device 100 or the detecting device 200.

The database managing part 320 has a configuration of acquiring the detailed information corresponding to the at least one piece of identification information and providing the user device 100 or the detecting device 200 with the detailed information.

In particular, the database managing part 320 may support the user device 100 or the detecting device 200 to provide the detailed information on the at least one UAV by referring to at least some of information on time when the piece of the identification information has been acquired and on a region where the at least one UAV has been detected. For example, if the time when the piece of the identification information has been acquired is the flight restricted time or if the region where the UAV has been detected is the flight restricted zone, the database managing part 320 may support the user device 100 or the detecting device 200 to provide the detailed information representing that the flight of the at least one UAV is not allowed.

The processor 330 may perform a function of controlling data flow among the communication part 310, the database managing part 320 and the like. In other words, the processor 330 may control data flow among components of the server device 300 to thereby control the communication part 310, the database managing part 320 and the like to perform their unique functions.

The processor 330 may include a hardware configuration of a Micro Processing Unit (MPU), a central processing unit (CPU), a cache memory, data bus, etc. In addition, it may further include a software configuration of an operation system, and an application for performing a particular purpose.

The server 300 as explained above may be a server of a government agency in charge of the aviation regulations.

Besides, the server 300 may be configured as a cloud server.

The embodiments of the present invention as explained above can be implemented in a form of executable program command through a variety of computer means recordable to computer readable media. The computer readable media may include solely or in combination, program commands, data files, and data structures. The program commands recorded to the media may be components specially designed for the present invention or may be usable to a skilled human in a field of computer software. Computer readable media include magnetic media such as hard disk, floppy disk, and magnetic tape, optical media such as CD-ROM and DVD, magneto-optical media such as floptical disk and hardware devices such as ROM, RAM, and flash memory specially designed to store and carry out program commands. Program commands include not only a machine language code made by a compiler but also a high level code that can be used by an interpreter etc., which is executed by a computer. The aforementioned hardware device can work as more than a software module to perform the action of the present invention and they can do the same in the opposite case.

Thanks to the characteristics as stated above, the present invention may prevent or minimize physical injury or property damage to an unspecified person, risk of infringing privacy, and may monitor and regulate whether the UAV complies with the laws and regulations.

Specifically, the present invention may prevent and minimize physical injury or property damage by recognizing and preparing in advance for risk of collision of a UAV or providing a possibility of physical injury or property damage caused by a variety of accessories installed in the UAV or its cargo, by informing people within a certain radius of the fact that the UAV is flying nearby. Besides, the present invention may prevent or minimize invasion of privacy, e.g., taking images or peeping, and damage that might be caused by unauthorized flight by monitoring and punishing the unauthorized flight of the UAV, e.g., flying at the flight restricted time under the aviation laws and regulations, flying in the flight restricted zone, or flying toward the protected facility.

The present invention has an effect of improving safety from UAVs, preventing security breach or privacy invasion, and monitoring a flight status.

The present invention has another effect of making users easily recognize a presence of an approaching anonymous UAV and properly respond, by receiving the identification information from the anonymous UAV and providing the users with the detailed information on the anonymous UAV using the identification information.

The present invention has still another effect of identifying the approaching anonymous UAV by acquiring the image or the sound of the anonymous UAV and making users easily recognize the presence of the anonymous UAV and properly respond.

The present invention has still yet another effect of allowing a user to easily report the anonymous UAV approaching to the government agency and making the government agency that receives the report properly monitor legality of the flight of the anonymous UAV.

As seen above, the present invention has been explained by specific matters such as detailed components, limited embodiments, and drawings. While the invention has been shown and described with respect to the preferred embodiments, it, however, will be understood by those skilled in the art that various changes and modification may be made without departing from the spirit and scope of the invention as defined in the following claims.

Accordingly, the thought of the present invention must not be confined to the explained embodiments, and the following patent claims as well as everything including variants equal or equivalent to the patent claims pertain to the category of the thought of the present invention.

## Claims

1. A method for monitoring a flight of an unmanned aerial vehicle (UAV), comprising steps of:
(a) a server, if a user device or a detecting device within a certain distance from at least one UAV acquires at least one piece of identification information from each of the at least one UAV, receiving the at least one piece of the identification information from the user device or the detecting device; and
(b) the server transmitting detailed information on the at least one UAV corresponding to the at least one piece of the received identification information to the user device or the detecting device to thereby support the user device or the detecting device to provide a user of the user device with the detailed information.

2. The method of Claim 1, wherein, at the step of (b), the server supports the user device or the detecting device to provide the detailed information by referring to at least some of information on time when the at least one piece of the identification information has been acquired and a region where the at least one UAV has been detected.

3. The method of Claim 1, wherein, even though the user device or the detecting device is within the certain distance from a specific UAV, if the user device or the detecting device fails to acquire specific identification information from the specific UAV among the at least one piece of the identification information, or if the specific UAV is not identified by the specific identification information, the server transmits to the user device or the detecting device specific detailed information on the specific UAV corresponding to the specific identification information acquired as a result of recognizing an image or a sound of the specific UAV.

4. The method of Claim 3, wherein, if the specific UAV approaches, the detecting device identifies the specific UAV by acquiring and analyzing the image or the sound of the specific UAV, or supports the server or another device to identify the specific UAV by transmitting the image or the sound to the server or said another device.

5. The method of Claim 3, wherein, if the specific UAV flies over a particular region, an unmanned surveillance vehicle for monitoring UAVs flying over the particular region identifies the specific UAV by acquiring and analyzing the image or the sound of the specific UAV, or supports the server or another device to identify the specific UAV by transmitting the image or the sound to the server or said another device.

6. The method of Claim 1, wherein the user device or the detecting device receives location information from each of the at least one UAV at a specified time interval and outputs the location information as an image or a sound.

7. The method of Claim 6, wherein, if velocity information received directly from the at least one UAV or calculated by using the location information acquired from the at least one UAV includes information exceeding a predetermined value, the user device or the detecting device outputs a fast approach warning signal.

8. The method of Claim 1, wherein the detailed information includes at least some of information on (i) technical characteristics, (ii) at least one flight departure point, (iii) at least one flight destination, (iv) flight time, (v) at least one flight route, (vi) an item in transit, (vii) accident history, (viii) an operator, and (ix) whether the at least one UAV complies with aviation regulations.

9. The method of Claim 1, wherein, if a report on a specific UAV is received from the user device, the server determines whether the specific UAV is allowed to fly and notifies an operator's device of the specific UAV or the user device.

10. The method of Claim 1, wherein the user device automatically transmits to the server reports on all UAVs except a UAV designated by the user.

11. The method of Claim 1, wherein the at least one UAV includes a beacon and transmits the at least one piece of identification information to the user device or the detecting device within the certain distance therefrom.

12. The method of Claim 1, wherein the server belongs to a government agency in charge of aviation regulations.

13. A method for monitoring a flight of a UAV, comprising steps of:
(a) a user device, if determined to be within a certain distance from at least one UAV, receiving at least one piece of identification information from each of the at least one UAV; and
(b) the user device acquiring detailed information on the at least one UAV corresponding to the at least one piece of the received identification information, and providing a user of the user device with the detailed information.

14. The method of Claim 13, wherein, if a detecting device receives the at least one piece of the identification information from each of the at least one UAV within the certain distance therefrom, the user device acquires the detailed information corresponding to the at least one piece of the identification information or acquires the detailed information by using the at least one piece of the identification information.

15. The method of Claim 14, wherein, even though the user device or the detecting device is within the certain distance from a specific UAV, if the user device or the detecting device fails to acquire specific identification information from the specific UAV among the at least one piece of the identification information, or if the specific UAV is not identified by the specific identification information, the user device acquires specific detailed information on the specific UAV corresponding to the specific identification information acquired as a result of recognizing an image or a sound of the specific UAV.

16. The method of Claim 15, wherein, if the specific UAV approaches, the detecting device identifies the specific UAV by acquiring and analyzing the image or the sound of the specific UAV, or supports the server or another device to identify the specific UAV by transmitting the image or the sound to the server or said another device.

17. The method of Claim 15, wherein, if the specific UAV flies over a particular region, an unmanned surveillance vehicle for monitoring UAVs flying over the particular region identifies the specific UAV by acquiring and analyzing the image or the sound of the specific UAV, or supports the server or another device to identify the specific UAV by transmitting the image or the sound to the server or said another device.

18. The method of Claim 14, wherein the user device or the detecting device receives location information from each of the at least one UAV at a specified time interval and outputs the location information as an image or a sound.

19. The method of Claim 18, wherein, if velocity information received directly from the at least one UAV or calculated by using the location information acquired from the at least one UAV includes information exceeding a predetermined value, the user device or the detecting device outputs a fast approach warning signal.

20. The method of Claim 13, wherein the detailed information includes at least some of information on (i) technical characteristics, (ii) at least one flight departure point, (iii) at least one flight destination, (iv) flight time, (v) at least one flight route, (vi) an item in transit, (vii) accident history, (viii) an operator, and (ix) whether the at least one UAV complies with aviation regulations.

21. The method of Claim 13, wherein, if the user device transmits a report on a specific UAV to the server, the user device receives information on whether the specific UAV is allowed to fly from the server.

22. The method of Claim 13, wherein the user device automatically transmits to the server reports on all UAVs except a UAV designated by the user.

23. The method of Claim 13, wherein, if the user device or the detecting device receives information on an emergency situation along with the identification information from a specific UAV, the user device or the detecting device outputs an image or a sound representing the emergency situation.

24. The method of Claim 13, wherein, if an image of a specific UAV is acquired by an input of the user, the user device recognizes the image and provides information on purchase of the specific UAV.

25. A method for monitoring a flight of a UAV, comprising steps of:
(a) a detecting device, if determined to be within a certain distance from at least one UAV, receiving at least one piece of identification information from each of the at least one UAV; and
(b) the detecting device acquiring detailed information on the at least one UAV corresponding to the received at least one piece of the identification information and providing a user device with the detailed information, or supporting the user device to acquire the detailed information by providing the user device with the at least one piece of identification information.

26. A server for monitoring a flight of a UAV, comprising:
a communication part, if a user terminal or a detecting device within a certain distance from at least one UAV acquires at least one piece of identification information from each of the at least one UAV, for receiving the at least one piece of the acquired identification information from the user terminal or the detecting device; and
a database managing part for acquiring detailed information on the at least one UAV corresponding to the received at least one piece of the identification information and supporting another device to provide the user device or the detecting device with the detailed information.

27. A user terminal for monitoring a flight of a UAV, comprising:
a communication part, if the user terminal is determined to be within a certain distance from at least one UAV, for receiving at least one piece of identification information from each of the at least one UAV; and
a user interface provider for acquiring detailed information on the at least one UAV corresponding to the received at least one piece of the identification information and providing a user of the user terminal with the detailed information.

28. A detecting device for monitoring a flight of a UAV, comprising:
a communication part, if the detecting device is determined to be within a certain distance from at least one UAV, for receiving at least one piece of identification information from each of the at least one UAV; and
a processor for acquiring detailed information on the at least one UAV corresponding to the received at least one piece of the identification information and providing a user device with the detailed information, or supporting the user device to acquire the detailed information by providing the user device with the at least one piece of identification information.
